# EUROPEAN PATENT APPLICATION

(11) **EP 3 016 393 A1**
(43) Date of publication of application: **04.05.2016**
(21) Application number: 14306737.9
(22) Date of filing: 30.10.2014
(51) Int. Cl.: H04N 21/222, H04L 29/06, H04N 21/262, H04N 21/24

(54) **Apparatuses, content distribution server, presentation device, methods and computer programs for providing information related to a service configuration for a service provided in a network**

(71) Applicant: ALCATEL LUCENT, 92100 Boulogne-Billancourt (FR)
(72) Inventor: Valentin, Stefan, 70435 Stuttgart (DE)
(74) Representative: 2SPL Patentanwälte PartG mbB

(57) **Abstract**

Apparatuses, a content distribution server, a presentation device, methods and computer programs for providing information related to a service configuration for a service provided in a network (300), the network (300) further comprising one or more content servers (200) and one or more presentation devices (150), which comprise one or more content clients (160), the service being provided from the one or more content servers (200) to the one or more content clients (160). The apparatus (10) comprises at least one input (12) to obtain information related to one or more context parameters of the presentation device (150) and at least one output (14) to provide the information related to the service configuration. The apparatus further comprises a control module (16) to provide the information related to the service configuration based on the information related to the one or more context parameters of the presentation device (150).

## Description

### Technical Field

Embodiments relate to apparatuses, a content distribution server, a presentation device, methods and computer programs for providing information related to a service configuration for a service provided in a network, more particularly, but not exclusively based on information related to one or more context parameters of a presentation device.

### Background

One of the major applications in modem networks, such as the Internet, is the streaming of media data. Providing media data as a stream, as compared to a full download, has a number of advantages: The media data may be used shortly after the stream has started, without having to wait for a complete download, the stream may also be adapted over time, as some media may only be relevant for, e.g., a specific location, or some media may adapt to a lower or higher transmission capacity.

Nonetheless, media streaming may also impose a number of problems: As the buffers for the media on the receiving side may be limited, or as providers of content and network may choose to limit the amount of data transferred in advance, clients using streaming media data may adopt schemes to avoid empty buffers, have to find a compromise between different inherent costs, while avoiding to stall the service the streaming media data is used for.

Conventional mechanisms used for controlling the buffer state and requesting new data segments may thus be based on the state of the buffer, the data size of the data segments, and the channel capacity available for transmitting the data. Unfortunately, the channel capacity available for transmitting data may quickly vary in several orders of magnitude, from a few kilobits per second or less to hundreds of megabits per second. Furthermore, some content providers may provide their content in different quality levels, to account for different transmission capacity scenarios. Some providers of streaming video content have, for example, long provided different quality levels of their content, to match different transmission capacities and screen sizes.

Further information can be found in:
R. Pantos and W. May, "HTTP live streaming", IETF, Informational Internet-Draft 2582, Sep. 2011, available: http://tools.ietf.org/html/draft-pantos-http-live-streaming-07;
ISO/IEC, International Standard DIS 23009-1.2, "Dynamic adaptive streaming over HTTP (DASH)", 2012, available:
   http://standards.iso.org/ittf/PubliclyAvailableStandards/c057623_ISO_IEC_23009-1_2012.zip;
R. Fielding, J. Gettys, J. Mogul, H. Frystyk, L. Masinter, P. Leach, and T. Berners-Lee, "RFC 2616, hypertext transfer protocol - HTTP/1.1", 1999, available: http://www.rfc.net/rfc2616.html;
T. Berners-Lee, R. Fielding, and L. Masinter "RFC 3986 Uniform Resource Identifier (URI): Generic Syntax", 2005, available: http://tools.ietf.org/html/rfc3986; and
Alcatel-Lucent, "Bell Labs and net mobile AG improve the quality of video streaming in vehicles on the move", Press release available at http://www.alcatel-lucent.com/press/2014/bell-labs-and-net-mobile-ag-improve-quality-video-streaming-vehicles-move, June 17, 2014, URL retrieved on Sep. 20, 2014.

### Summary of illustrative Embodiments

Some simplifications may be made in the following summary, which is intended to highlight and introduce some aspects of the various exemplary embodiments, but such simplifications are not intended to limit the scope of the invention(s). Detailed descriptions of a preferred exemplary embodiment adequate to allow those of ordinary skill in the art to make and use the inventive concepts will follow in later sections.

Various embodiments provide apparatuses, a content distribution server, a presentation device, methods and computer programs for providing information related to a service configuration for a service provided in a network. As both providers of content and producers of content clients on mobile devices strife to provide content in the best possible configuration, both parties may be looking for ways of increasing the average quality provided to single or to a number of users.

Embodiments provide an apparatus for providing information related to a service configuration for a service provided in a network. The network further comprises one or more content servers and one or more presentation devices, which comprise one or more content clients. The service is provided from the one or more content servers to the one or more content clients. The apparatus comprises at least one input to obtain information related to one or more context parameters of the presentation device and at least one output to provide the information related to the service configuration. The apparatus further comprises a control module to provide the information related to the service configuration based on the information related to the one or more context parameters of the presentation device. The inclusion of context parameters may help to select the appropriate service configuration, by, for example, incorporating additional information in the determination process.

In some embodiments, the one or more context parameters may correspond to one or more elements of the group of a current transmission capacity from the content server to the presentation device in the network, a predicted future transmission capacity to the presentation device in the network, a geographical localization accuracy of the presentation device, a geographical location of the presentation device. The one or more context parameters may further correspond to one or more elements of the group of an application type of a content provided by the content server, a set of content-related parameters provided by the content server, a transmission capacity demand of the content client and/or of the content server, or information related to content of the service, trajectory and/or velocity of the presentation device. Such context parameters may help the selection of the appropriate service configuration, by providing, in embodiments, information about the channel, the location, or the content being requested.

The information related to the one or more context parameters may, in various embodiments, be comprised in or attached to a Hyper Text Transfer Protocol GET-request method (HTTP GET), and/or a Unified Resource Locator (URL), of a HTTP GET request. The information related to the one or more context parameters may also be communicated using a HTTP POST request method. Using such pre-existing and well-known mechanisms, no additional protocol may be required for the transmission of said information.

In various embodiments, the information related to the service configuration may comprise at least one of the elements of the group of information related to a subset of information related to a specific logical location of content of the service, information related to at least one of different quality levels, information related to one or more data segments for the service, information related to the presentation time of the content, information related to the data size of the content, information related to meta information. Such information might then be used to select the relevant sub-set of content of the service.

In some embodiments, the presentation device may correspond to user equipment wirelessly communicating with the network. The control module may further be configured to change the information related to the service configuration dynamically based on changing information related to the one or more context parameters of at least one of the one or more clients. As user equipment may often be mobile in nature, the data transmission capacity of the use equipment may vary substantially over time, as may the one or more context parameters, which may result in an adaptation of the service configuration according to the current or future context or data transmission capacity of the user equipment.

In some embodiments, the at least one input may further be configured to obtain information related to a general logical location of content corresponding to the information related to the one or more context parameters from the one or more content clients. The at least one output may further be configured to request, from one of the one or more content servers, a list of specific logical locations of content based on the information related to a general logical location of content. The control module may further be configured to provide information related to a subset of the information related to a specific logical location of content based on the information related to a selected configuration and corresponding to the information related to the service configuration. Using such information, the content client might then request the appropriate sub-stream of the service.

The presentation device may, in some embodiments, further comprise one or more context parameter clients. The control module may further be configured to obtain, using the at least one input, information related to a general logical location of content from the one or more content clients and corresponding information related to the one or more context parameters from the context parameter client. The control module may further, in embodiments, be configured to request, using the at least one output, information related to a list of specific logical locations based on the information related to the general logical location of the content from at least one of the one or more content servers. The control module may further be configured to provide, using the at least one output, information related to a subset of the information related to the specific logical location of the content, based on the information related to the service configuration to the one or more content clients. The context parameters provided by said context parameter clients may then be used to select the appropriate service configuration, and, for the client, after receiving the subset of the information related to the specific logical location of the client, to request the appropriate sub-stream of the service. Such context parameter clients might also avoid having to adapt the content client to the adaptation server.

In some embodiments, the information related to the general logical location of the content may comprise address information of at least one of the one or more content servers. The information related to the list of specific logical locations of the content may, in embodiments, correspond to information related to one or more sets of data for the service in accordance with different quality levels or configurations of the service. These sets of data, which may comprise information related to the specific location of segments of a quality level or configuration of a service, might then be used to request the appropriate segments of the service at the content client.

In various embodiment, the control module may be configured to determine the information related to the service configuration based on the information related to the one or more sets of data and the information related to the one or more context parameters. The control module may further be configured to provide, using the at least one output, information related to a selected set of data to the one or more content clients as information related to the service configuration. The content clients might then use such information to request the appropriate sub-stream of the service.

Embodiments further provide a content distribution control server comprising the apparatus. Such a server may be used to coordinate the requests of a number of users, which may result in an improved average quality delivered to the users.

Embodiments further provide an apparatus for a presentation device comprising a content client for a network. The network further comprises a content distribution control server and one or more content servers. The apparatus comprises an input to obtain information from the content distribution control server and an output to provide information to the content distribution control server. The apparatus further comprises a control module to control the input and the output, provide information related to context parameters to the content distribution control server, and obtain information related to a service configuration from the content distribution control server. The apparatus might thus be used to provide the content servers and the content distribution control server with the requests and necessary context information.

In some embodiments, the input may further be configured to obtain information from the one or more content servers, and the output may further be configured to provide information to the one or more content servers. In various embodiments, the control module may further be configured to request a service from the one or more content servers, and the control module may further be configured to obtain information related to a service content related to the requested service based on the information related to the service configuration. Using the information related to the service configuration, the apparatus may, in embodiments, request the information related to the service, to use in the content client.

Embodiments further provide a presentation device comprising the apparatus. The presentation device further comprises one or more content clients, which is/are coupled to the control module. Presentation devices comprising the apparatus might then communicate with a content distribution control server to obtain the appropriate service configuration.

Embodiments further provide a method for providing information related to a service configuration for a service provided in a network. The network further comprises one or more content servers and one or more presentation devices, which comprise one or more content clients. The service is provided from the one or more content servers to the one or more content clients. The method comprises obtaining information related to one or more context parameters of the presentation device and providing the information related to the service configuration based on the information related to the one or more context parameters of the presentation device.

Embodiments further provide a method for a presentation device comprising a content client for a network. The network further comprises a content distribution control server and one or more content servers. The method comprises obtaining information from a content distribution control server, providing information to the content distribution control server, providing information related to context parameters to the content distribution control server, and obtaining information related to a service configuration from the content distribution control server.

Embodiments further provide a computer program having a program code for performing at least one of the above methods, when the computer program is executed on a computer, a processor, or a programmable hardware component. A further embodiment is a computer readable storage medium storing instructions which, when executed by a computer, processor, or programmable hardware component, cause the computer to implement one of the methods described herein.

### Brief description of the figures

Some other features or aspects will be described using the following non-limiting embodiments of apparatuses or methods or computer programs or computer program products by way of example only, and with reference to the accompanying figures, in which:
Fig. 1 illustrates a block diagram of an embodiment of an apparatus for providing information related to a service configuration for a service provided in a network;
Fig. 2 illustrates a block diagram of an embodiment of an apparatus for providing information related to a service configuration for a service provided in a network for a service provided from a content server to a user equipment wirelessly connected to the network;
Fig. 3 illustrates a block diagram of an embodiment of a system using centralized adaptation;
Fig. 4 illustrates a sequence diagram of an embodiment;
Fig. 5 illustrates a sequence diagram of an embodiment using a separate context parameter client;
Fig. 6 illustrates a sequence diagram of an embodiment using out-of-band signaling;
Fig. 7 illustrates a block diagram of an embodiment of a content distribution control server comprising the apparatus;
Fig. 8 illustrates a block diagram of an embodiment of an apparatus for a presentation device;
Fig. 9 illustrates a block diagram of an embodiment of a presentation device comprising a content client and the apparatus;
Fig. 10 illustrates a flow chart of an embodiment of a method for providing information related to a service configuration for a service provided in a network; and
Fig. 11 illustrates a flow chart of an embodiment of a method for a presentation device.

### Description of Embodiments

Various example embodiments will now be described more fully with reference to the accompanying drawings in which some example embodiments are illustrated. In the figures, the thicknesses of lines, layers or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

HyperText Transfer Protocol (HTTP) Adaptive Streaming (HAS) may adapt the quality of the media stream and other parameters (e.g., buffer size) at the streaming client. This means that a media player application running on a mobile device may adapt the quality it requests from the content server independent of the state of other users in a network.

In wireless networks this independent adaptation may pose a significant problem, since media streaming may come at a high data rate and the wireless channel often is a shared medium. This means that all mobile devices, served by the same base station, may share the same wireless channel resources. If several streaming device increase their streaming quality simultaneously, they might overload the channel resources and, consequently, may heavily decrease the Quality-of-Service for all users associated to that base station.

In embodiments, configuration selection may be performed for multiple users at once. Such coordination among users might avoid that multiple users increase their streaming quality at the same time, which would result in an overloaded network. A centralized solution may avoid such overload by, in embodiments, finding the most efficient combination of quality levels over a set of multiple users that perform streaming. In general, coordinating the requests and the channel uses over multiple users may lead to a substantial gain of average spectral efficiency.

In its most efficient form, such multi-user adaptation might be implemented in a centralized manner. This means that a central adaptation server (which may be a software program) might be aware of the current state of multiple users at once by making use of an efficient signaling procedure in a star topology. Distributed optimization approaches might follow a mesh topology and may be in general less efficient since the state and the decision has to be exchanged between all mobile devices before the adaptation can take place.

Embodiments may enable to integrate such centralized adaptation within the HAS protocol cycle while requiring only insignificant changes of existing infrastructure, software or standards. This may allow the immediate deployment of centralized adaptation servers at low cost.

Distributed adaptation, as currently done by HAS clients, may also provide a limited degree of control. The operators of streaming service and network might only grant or deny a certain request, while the streaming client may usually not be aware of the state of the network. Consequently, if the client requests a streaming configuration that exceeds the available date rate of the network, the operator might only deny the request. This may lead to a disruption of the media stream and, thus, to a large decrease of Quality-of-Service (QoS). With centralized adaptation, the operator might be, first, able to adjust the configuration to decrease the requested data rate and, second, grant this decreased request. Consequently, the user might still receive a fluent stream at a slightly lower resolution.

The missing degree of control may also allow to manipulate the use of network and service. Since media streaming clients may be software applications and HAS system may be based on Internet standards, it might be possible to modify the requests of a media player. This may allow to overload network and content server by intention. With a transparent integration of the adaptation server into the HAS protocol flow, such attacks might be impossible.

In at least some embodiments, an adaptation server may be transparently integrated into the standard information flow of HTTP-based media streaming protocols, such as HTTP Live Streaming and Moving Picture Expert Group Dynamic Adaptive Streaming over HTTP (MPEG-DASH). Embodiments may cover protocol specifications that enable such integration.

Transparent integration may mean that the new adaptation cycle might not require new functionality on the streaming server (e.g., a content server or node of a content-delivery network) and, at best, no new functionality on the streaming client (e.g., a video player). Such transparency may allow to deploy a new adaptation server without having to change the server and CDN infrastructure and with no or only minimal changes on the player application. The protocols, thus, might enable the seamless deployment of a centralized adaptation server for HAS, without the need to change the existing infrastructure.

Embodiments may be based on standard HTTP methods at the application layer (ISO/OSI Layer 7) and might be implemented without any change of the HTTP specification. Embodiments may provide a deterministic message flow with low signaling overhead. Embodiments may work with arbitrary type of media streams, which might follow the HTTP-based streaming specifications or similar segment-based media streaming specifications. A flexible choice of the adaptation parameters such as preferred quality level and duration of an adaptation cycle may be supported. Specifics of HTTP-based media streaming (such as hierarchical playlists) may be accounted for.

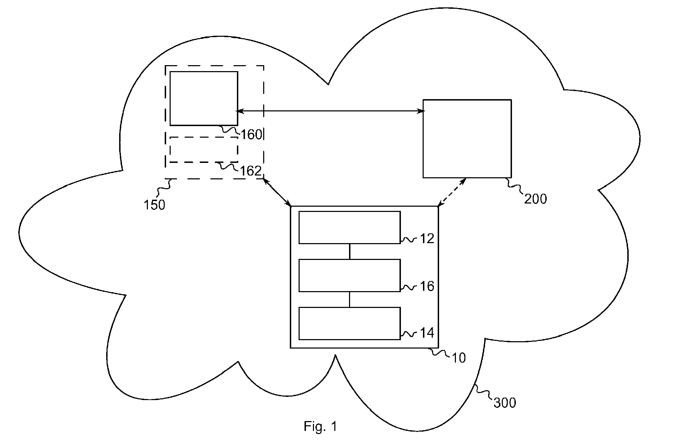

In the following, some embodiments for apparatuses, a content distribution server, a presentation device, methods and computer programs for providing information related to a service configuration for a service provided in a network will be described. Fig. 1 illustrates a block diagram of an embodiment of an apparatus 10, comprising at least one input 12, at least one output 14, and a control module 16. Fig. 1 further illustrates one or more media presentation devices 150 comprising one or more content clients 160. In embodiments, the media presentation devices 150 may further comprise one or more context parameter clients 162, indicated by dotted lines. Fig. 1 further illustrates one or more content servers 200. The media presentation device 150 is coupled to both the apparatus 10 and the one or more content servers 200. In some embodiments, the apparatus 10 may also be coupled to the content server 200, as indicated by the dotted line.

The apparatus 10 is configured to provide information related to a service configuration for a service provided in a network 300.

In some embodiments, the information related to the service configuration may comprise at least one of the elements of the group of information related to a subset of information related to a specific logical location of content of the service, information related to at least one of different quality levels, information related to one or more data segments for the service, information related to the presentation time of the content, information related to the data size of the content, or information related to meta information, such as, for example, a viewing angle of a visual media stream, a language of a media, subtitles, or an audio track. A data segment may correspond to a data packet or a block of data, e.g. digital or binary data, which may comply with a protocol, e.g. a streaming or media service protocol.

The data channel may correspond to a wired or wireless network suitable for the transmission of data. In some embodiments, the wired network may correspond to network built on twisted pair cables, coaxial cables, or optical cables. In some embodiments, the network may also correspond to a wireless network. A wireless network may, in embodiments, correspond a mobile communication system.

In general, the mobile communication system may, for example, correspond to one of the Third Generation Partnership Project (3GPP)-standardized mobile communication networks, where the term mobile communication system is used synonymously to mobile communication network. The mobile or wireless communication system may correspond to, for example, a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

The network 300 further comprises one or more content servers 200 and one or more presentation devices 150, which comprise one or more content clients 160.

A content server may correspond to a server serving content to clients in a network. In embodiments, a content server may correspond to a software application running on network node physically separated from the content client. This might be a dedicated server of a media service provider or a node in a Content Delivery Network (CDN) or any other kind of dedicated, virtual or shared server that has access to the stored media content. In embodiments, the content served to the clients may comprise video data, audio data, multimedia data, mapping data, location data, navigation data, composite multi-media data, or visual data. A network node, or node, may refer to a network device that is connected to the Internet or another network.

The presentation device might correspond to, in embodiments, user equipment, a mobile device, a smartphone, a tablet computer, a personal digital assistant, a personal computer, a laptop computer, a navigation device, a television, a mobile television, a media streaming device, an internet radio receiver, an audio receiver, a video receiver, radio equipment, a mobile, a mobile station, a notebook, a Personal Digital Assistant (PDA), or an Universal Serial Bus (USB)-stick.

The service is being provided from the one or more content servers 200 to the one or more content clients 160. The apparatus 10 comprises at least one input 12 to obtain information related to one or more context parameters of the presentation device 150 and at least one output 14 to provide the information related to the service configuration.

An input may correspond to an interface for receiving information, which may be represented by digital (bit) values according to a specified code or protocol, within a module, between modules or between modules of different entities. An output may correspond to an interface for transmitting information, which may be represented by digital (bit) values according to a specified code or protocol, within a module, between modules, or between modules of different entities.

In various embodiments, the one or more context parameters may correspond to one or more elements of the group of a current transmission capacity from the content server to the presentation device 150 in the network 300, a predicted future transmission capacity to the presentation device 150 in the network 300, a geographical localization accuracy of the presentation device 150, a geographical location of the presentation device 150, an application type of a content provided by the content server 200, a set of content-related parameters provided by the content server 200, a transmission capacity demand of the content client 160 and/or of the content server 200, information related to content of the service, trajectory and/or velocity of the presentation device 150. The information related to the one or more context parameters may, in embodiments, be comprised in or attached to a HTTP GET-request method, and/or a URL, of a HTTP GET request. The information related to the one or more context parameters might further be communicated using a HTTP POST request method. HTTP primitives are fundamental protocol messages as specified in the Hypertext Transfer Protocol. Embodiments may make use of the primitives GET a,b and POST a,b, where a and b may refer to transmitted context parameters of the according primitives.

The apparatus 10 further comprises a control module 16 to provide the information related to the service configuration based on the information related to the one or more context parameters of the presentation device 150. In embodiments the control module 16 may be implemented using one or more processing units, one or more processing devices, any means for processing, such as a processor, a computer or a programmable hardware component being operable or configured with accordingly adapted software. In other words, the described functions of the control module 16 may as well be implemented in software, which is then executed on one or more programmable hardware components. Such hardware components may comprise a general purpose processor, a Digital Signal Processor (DSP), a micro-controller, etc.

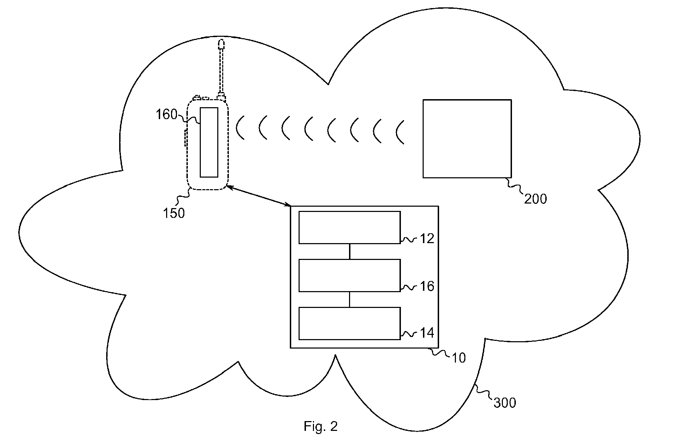

In some embodiments, as shown in Fig. 2, the presentation device 150 may correspond to user equipment wirelessly communicating with the network 300. Fig. 2 illustrates a block diagram of an embodiment of the apparatus 10, comprising the at least one input 12, the at least one output 14 and the control module 16. Fig. 2 further illustrates one or more presentation devices 150 corresponding to user equipment, comprising the one or more content clients 150. Fig. 2 further shows one or more content servers 200, which are wirelessly coupled to the user equipment/presentation device 150. Further, Fig. 2 shows the user equipment/presentation device 150 being coupled to the apparatus 10, and the input 12 and the output 14 being coupled to the control module 16.in some embodiments, the control module 16 may be configured to change the information related to the service configuration dynamically based on changing information related to the one or more context parameters of at least one of the one or more clients 150.

A user equipment may correspond to a presentation device, a mobile device, a smartphone, a tablet computer, a personal digital assistant, a personal computer, a laptop computer, a navigation device, a television, a mobile television, a media streaming device, an internet radio receiver, an audio receiver, a video receiver, radio equipment, a mobile, a mobile station, a notebook, a Personal Digital Assistant (PDA), or an Universal Serial Bus (USB) -stick.

In various embodiments, the presentation device 150 may further comprise one or more context parameter clients 162. The control module 16 may, in embodiments, further be configured to obtain, using the at least one input 12, information related to a general logical location of content from the one or more content clients 160 and corresponding information related to the one or more context parameters from the context parameter client 162. In various embodiments, the control module 16 may further be configured to request, using the at least one output 14, information related to a list of specific logical locations based on the information related to the general logical location of the content from at least one of the one or more content servers 200. The control module 16 may further be configured to provide, using the at least one output 14, information related to a subset of the information related to the specific logical location of the content, based on the information related to the service configuration to the one or more content clients 160.

In embodiments, the one or more context parameter client 162 may be configured to provide information related to context parameters to the apparatus 10. In embodiments, the one or more context parameter clients may also be configured to obtain information related to a service configuration from the content distribution control server 100. The one or more context parameter clients 162 may further be configured to request a service from the one or more content servers (200) and to obtain information related to a service content related to the requested service based on the information related to the service configuration.

In embodiments, the one or more parameter clients 162 may be implemented using one or more processing units, one or more processing devices, any means for processing, such as a processor, a computer or a programmable hardware component being operable or configured with accordingly adapted software. In other words, the described functions of the one or more parameter clients may as well be implemented in software, which is then executed on one or more programmable hardware components. Such hardware components may comprise a general purpose processor, a Digital Signal Processor (DSP), a micro-controller, etc.

In some embodiments, as further illustrated in Fig. 1, the at least one input 12 may further be configured to obtain information related to a general logical location of content corresponding to the information related to the one or more context parameters from the one or more content clients. The at least one output 14 may, in embodiments, further be configured to request, from one of the one or more content servers 200, a list of specific logical locations of content based on the information related to a general logical location of content. In embodiments, the control module 16 may further be configured to provide information related to a subset of the information related to a specific logical location of content based on the information related to a selected configuration and corresponding to the information related to the service configuration.

A general logical location of content may, in embodiments, correspond to a logical address pointing to a logical location of a list or set of specific locations of data segments or streams comprising the content. This set of specific locations, may, in embodiments, comprise subsets of specific locations of data segments or streams, which may correspond to the different configurations of the content. In embodiments, the information related to general or specific locations may correspond to addresses in an addressing system used to denominate entities in the network 300, and may correspond to Uniform Resource Locators (URLs) or Uniform Resource Identifiers (URIs) as defined in Internet Engineering Task Force (IETF) Request For Comments (RFC) 3986.

In some embodiments, the information related to the general logical location of the content may comprise address information of at least one of the one or more content servers 200. The information related to the list of specific logical locations of the content may, in embodiments, correspond to information related to one or more sets of data for the service in accordance with different quality levels or configurations of the service. A streaming quality or streaming quality level may correspond to a subset of content stream that is encoded at a specific source encoding bitrate. A media stream of quality level *l* may refer to a set of segments (e.g., files) all encoded at quality level *l* and used in a specific order. A segment, sometimes called chunk, may refer to a fragment of a content stream. Such a fragment may have a fixed duration but (due to variable bitrate encoding) a variable bit length. Such a segment may be seen as a file stored on the file system or in a database on the content server.

In embodiments, the sets of data may correspond to a list of specific logical locations of the data of content, a list of logical locations of streams of content, a playlist, such as e.g., a manifest file as defined in HAS, a Media Presentation Description (MPD) as defined in MPEG-DASH, a playlist in M3U, ASX, or PLS format etc.

In some embodiments, the control module 16 may also be configured to determine the information related to the service configuration based on the information related to the one or more sets of data and the information related to the one or more context parameters. The control module 16 may further be configured to provide, using the at least one output 14, information related to a selected set of data to the one or more content clients 160 as information related to the service configuration.

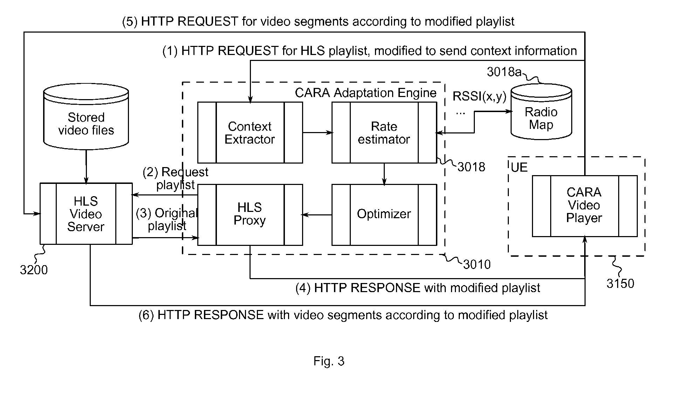

Fig. 3 illustrates an example of an embodiment for HTTP adaptive video streaming. It consists of the three main nodes UE 3150, which may correspond to the presentation device 150, video server 3200, which may correspond to the content server 200, and Content Aware Resource Allocation (CARA) Adaptation Engine 3010, which may correspond to the apparatus 10. The message flow among the nodes and function for embodiments is illustrated. The temporal order of these messages is indicated by the number (1) to (6). In embodiments, Context-Aware Resource Allocation may refer to the allocation of network resources depending on the user's context, i.e., a set of observables describing its current situation (e.g., location, application type, demand etc.).

In embodiments, an adaptation cycle may begin with an initial HTTP request for a video stream. The originator of this request might be either the video player application on the UE 3150 or a middleware providing streaming functionality. In Embodiments, the request may be sent to the adaptation engine 3010, whose IP address or DNS name is known to the UE 3150 (e.g., by a proxy setting in the video player application). Before transmitting the request, the UE 3150 may add context information (i.e., context parameters used for adaptation) to the request.

These context parameters, may, in embodiments, be transmitted using a number of methods, e.g.:
1. Attached to a conventional HTTP GET request, which may violate the HTTP specification but might be implemented on the communicating nodes player and proxy without further drawback.
2. Attached to the URL, using a query string. For instance GET /playlist.m3u8?parameter1=value1&parameter2=value2, which is a standard method to attach data to an HTTP GET request.
3. Separately using the HTTP POST primitive. This method may decouple the context update from the playlist request and may add another transmission to the communication protocol. With respect to the information exchange, the operation may be equivalent to a single GET request of method 1 or 2. A GET a,b request might be equivalently transformed into the primitives GET a and POST b.

In embodiments, the request may be processed at the adaptation engine. The context information may be extracted and used for adaptation. Fig. 3 also shows an optional rate estimator 3018 that may be used on a radio map 3018a, which may be stored in an external data base. After the optimizer may have used this information to choose an arbitrary video configuration *l* ∈ *L* to adapt the video configuration, it might issue an HTTP request to the video server. The video server may respond with a playlist either for the video stream of *l* or to a playlist pointing to multiple configurations. In the latter case, the proxy may have to extract the references to *l* from the original playlist and may use them to create a modified playlist that only refers to stream of configurations *l*. This potentially modified playlist may then be sent to the video player.

Then, conventional video streaming for configuration *l* might start. The client may request segments in the order as specified in the playlist. A timer on the client may assure that new HTTP request with updates of the context information are send periodically to the adaptation engine. This may enable that the video configuration may be periodically adapted with respect to changes in the context information.

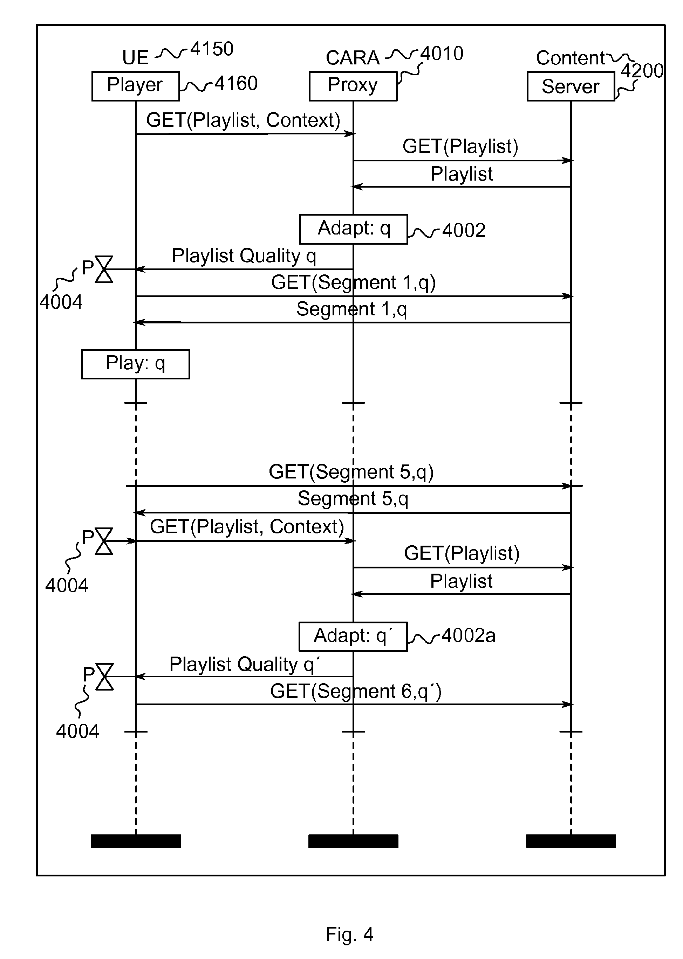

Fig. 4 illustrates a sequence diagram of an embodiment, which may provide a formal and more generic specification of the protocol illustrated above. This Message Sequence Chart (MSC) defines the basic principle of a signaling protocol, which may integrate a dedicated adaptation server into HAS. This integration may be transparent for the content server but may require to extend the client to, first, issue its GET request for the playlist to the proxy 4010 and, second, to extend this request in order to send "context parameters" to an adaptation algorithm running on the proxy. Such embodiment might be referred to as inband signaling since the adaptation server may act as proxy 4010 within the signaling path between client 4150 and server 4200.

The streaming client 4160 may initiate the session by sending an HTTP GET for the playlist to the proxy 4010. This request may also include a set of context parameters, which may be embedded using one of the options above. After extracting the context parameters, the proxy may forward the clients request to the server 4200. The server may answer with a playlist file.

At this point, the proxy might have all information to adapt the content configuration. It may use context information from the client and meta information from the playlist (e.g., the supported quality levels and the according encoding bitrates) to adapt the service configuration. In the MSC it is assumed that an arbitrary value *q* is selected by the "Adapt" function. The proxy 4010 may then send a playlist referring only to configuration *q* 4002 to the media client 4160. Initially, this playlist may typically be obtained by removing all referrers to streams of a configuration other than *q* from the originally received playlist. A more detailed procedure for hierarchical playlists is shown subsequently.

After the client 4160 has received the playlist for configuration *q,* it may set a timer P 4004 to trigger the next adaptation cycle. Then the client 4160 may start requesting the segments of configuration *q* 4004 in the order specified in the received playlist. This may start the streaming of the media content.

Once timer P triggers an adaptation cycle, the client might transmit another GET request with updated context information to the proxy 4010. If the playlist URL has changed with respect to the initial request, the proxy 4010 may request the playlist from the server. In either case, the proxy 4010 might use updated context information to perform a new adaptation of the configuration. In Fig. 4, configuration *q'* 4002a is selected and the according playlist may be transmitted to the client 4150.

If, in embodiments, the new configuration *q'* 4002a differs from the old configuration *q* 4002, creating this playlist may be more elaborate at this point of the session. Media streaming with the previous configuration *q* 4002 may still be ongoing and segments with configuration *q* 4002 might be stored in the buffer. To account for these segments, the proxy 4010 may have to merge the playlist for *q* 4002 and *q'* 4002a. In embodiments, the proxy 4010 may have to:
1. Test if *q* ≠ *q'*, in this case:
2. Modify playlist for *q* 4002: Remove all references to segments that are not downloaded and are not in the buffer. Store the index of the last segment *i*.
3. Modify playlist for *q'* 4002a: Remove references to segments prior to segment *i* + 1.
4. Append playlist for *q'* 4002a to the playlist for *q* 4002.

After the client has received the merged playlists, it may use the remaining segments for *q* 4002 until segment *i* is reached and may then start to request segments *i* + 1 for configuration *q'.* Streaming these segments may continue until, in embodiments, the timer P 4004 may trigger the next adaptation period.

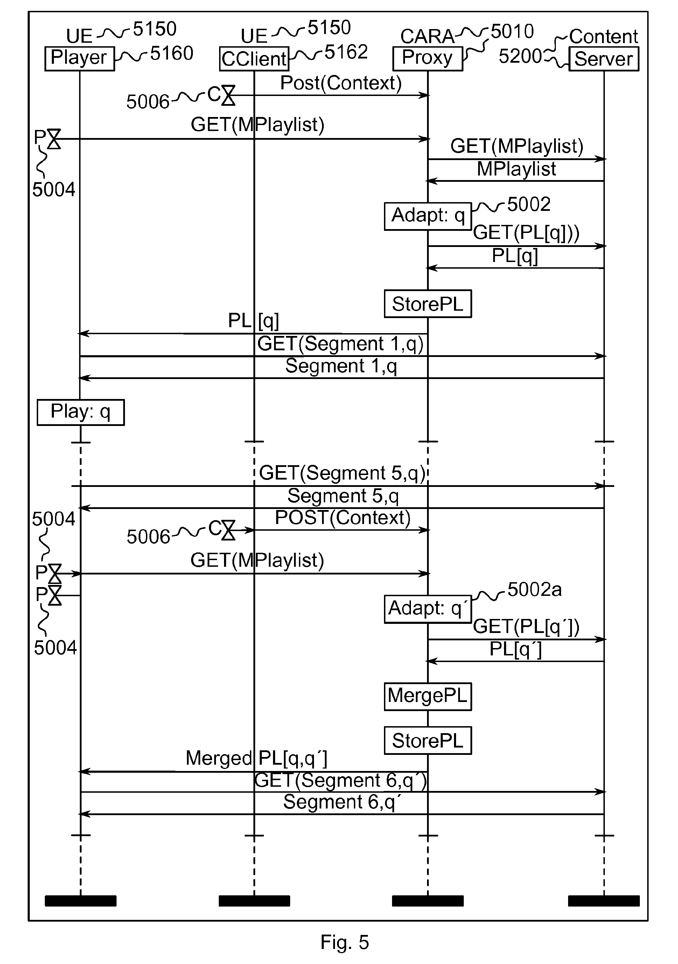

Some embodiment may provide transparent inband signaling for HTTP Adaptive Streaming, as shown in Fig. 5. In embodiments, the playlist request may be decoupled from the transmission of context information by using the HTTP POST primitive. This may enable to integrate the adaptation server into the HAS cycle in a manner that is transparent to both sides of the end-to-end service. In embodiments, neither the media player nor the server may need to be modified to support a centralized adaptation server. Only the IP address or DNS name of the proxy 5010 may have to be made known to the client, e.g., by using a proxy setting of the player application or by using a transparent proxy functionality of the operation system.

In embodiments, which may provide a fully transparent implementation, the context information may be obtained and transmitted by a separate context parameter client 5162, also denoted "CClient" in Fig. 4, which may correspond to the context parameter client 162. The context parameter client 162 may run on the user equipment 5150, which may correspond to the presentation device 150. In embodiments, this might be either a separate application running in the background, a thread or child-process initiated by the player application, or even an operation system process or hardware module.

Although the context client may, in embodiments, transmit the information related to context parameters separate from the client requests, the overall operation may be seen as similar to Fig. 4. As above, the specification might be referred to as inband signaling as the proxy 5010, which may correspond to the apparatus 10, may be within the signaling path for the playlist requests.

Unlike in Fig. 4, the context parameter client 5162 may use its own timer C 5006 to send a new update of the context information. This might be necessary if the context parameter client 5162 has no access to the internal timer P of the content client 5160, also denoted "Player" in Fig. 5. Another difference to Fig. 4 is that embodiments may account for hierarchical playlists. Playlists may, in embodiments, correspond to lists of specific or general logical locations of content. HTTP-based content streaming servers may, in embodiments, use playlists of two levels to describe a media stream:
- Level 1: Master data lists may contain URLs to the data lists of Level 2. Typically multiple URLs, one for each supported configuration, are included in this list. These playlists are indicated by MPlaylist in Fig. 5 and may be also called manifest files, master playlists, media presentation description (MPD), master chunklists or master segment-lists.
- Level 2: These playlists may be called second-level manifest files, media presentation description (MPD), chunklists or segment-lists. Such a list may be available for each of L supported configurations. It may contain referrers to the segments of a specific configuration *l sorted* in the order of playback. This type of playlist is indicated by *PL [l]* in Fig. 5 where l may take the value *q* 5002 or *q'* 5002a.

After the proxy 5010 has received the MPlaylist from the content server, it may know which configurations are supported and may perform adaptation. For the selected configuration *q,* the proxy may then extract the URL to *PL*[*q*] from the MPlaylist file and may request the file of *PL*[*q*].

In the next adaptation cycle, MPlaylist may still be available at the Proxy 5010. Thus, another request might not be necessary anymore. If *q ≠ q'* the playlists *PL*[*q*] and *PL*[*q'*] might be merged as described above.

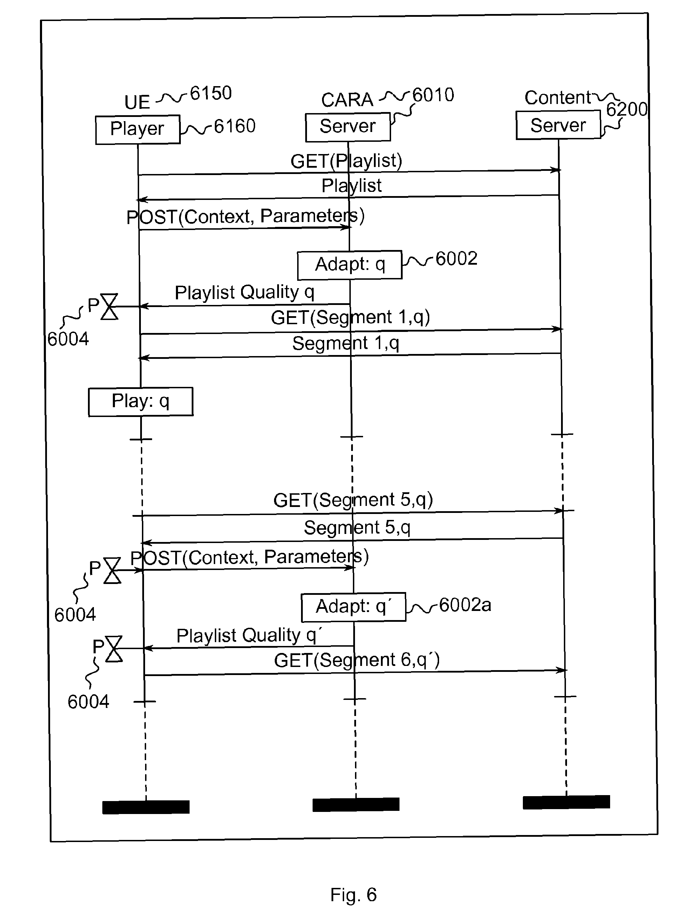

Fig. 6 illustrates a sequence diagram of an embodiment for integrating centralized adaptation into the HAS protocol cycle. In this embodiment no proxy might be within the message flow when the client 6160, comprised in the user equipment 6150, requests the playlist from the server. Such embodiments may be called out-of-band signaling and denote the node operating the adaptation engine as CARA server 6010. Fig. 6 further illustrates the content server 6200, which is coupled to the user equipment 6150. Further, the CARA server 6010 is coupled to the user equipment 6160. In embodiments, the user equipment (UE) 6150 may correspond to one of the one or more presentation devices 150, the client 6160, also denoted Player in Fig. 6, may correspond to one of the one or more content clients 160, the CARA server 6010 may correspond to the apparatus 10, and the content server 6200 may correspond to the one or more content servers 200.

As shown in Fig. 6, in embodiments, the client 6160 may initiate the streaming session. It may directly request a playlist file from the content server 6200 using HTTP GET. After the client 6160 received the response, it may use HTTP POST to send the context information and the necessary playlist parameters to the CARA server 6010, which may then start the adaptation. The remaining part of the protocol cycle may be seen as similar to Fig. 5.

The direct exchange of the playlist between client and server may have two important consequences:
1. The client may need to forward the adaptation-relevant playlist parameters to the server. Although the additional overhead compared to other embodiments will be insignificant, the client may now have control of the playlist parameters used for adaptation. Since the client might manipulate this information to change the adaptation process, embodiments may only be recommended for trusted implementations of the client.
2. The client may need to process the playlist. In particular it may need to extract metadata, referrers to chunklists and it may have to merge playlists of multiple qualities. This may add computational overhead to the UE.

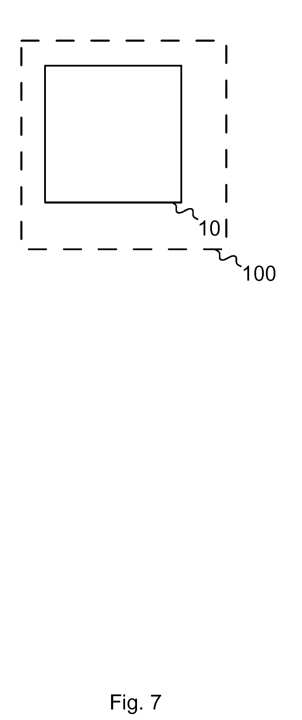

Fig. 7 shows a block diagram of an embodiment of a content distribution control server 100 comprising the apparatus 10. In embodiments, a content distribution control server 100 may correspond to a software application running on a network node physically separated from the content client. This might be a dedicated server of a media service provider, a node in a Content Delivery Network (CDN) or any other kind of dedicated, virtual or shared server or node that has access to the network 300.

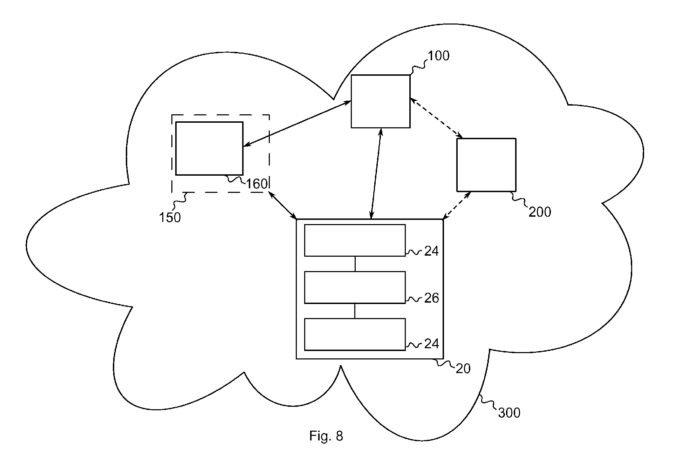

Fig. 8 illustrates a block diagram of an embodiment of an apparatus 20 for a presentation device 150. The presentation device further comprises a content client 160 for a network 300. The network 300 further comprises a content distribution control server 100 and one or more content servers 200. The apparatus 20 is coupled to the presentation device 150 and the content distribution control server 100, and the presentation device 150 is further coupled to the content distribution control server 100. Fig. 8 further shows a content server 200, which may, in embodiments be coupled to the apparatus 20 and/or the content distribution control server 100.

The apparatus 20 comprises an input 22 to obtain information from the content distribution control server 100 and an output 24 to provide information to the content distribution control server 100. The apparatus 20 further comprises and a control module 26 to control the input 22 and the output 24, provide information related to context parameters to the content distribution control server 100, and obtain information related to a service configuration from the content distribution control server 100. As shown in Fig. 8, the control module 26 is coupled to the input 22 and the output 24.

In some embodiments, the input 22 may further be configured to obtain information from the one or more content servers 200 and the output may be further configured to provide information to the one or more content servers 200. The control module 26 may further be configured to request a service from the one or more content servers 200. The control module 26 may further be configured to obtain information related to a service content related to the requested service based on the information related to the service configuration.

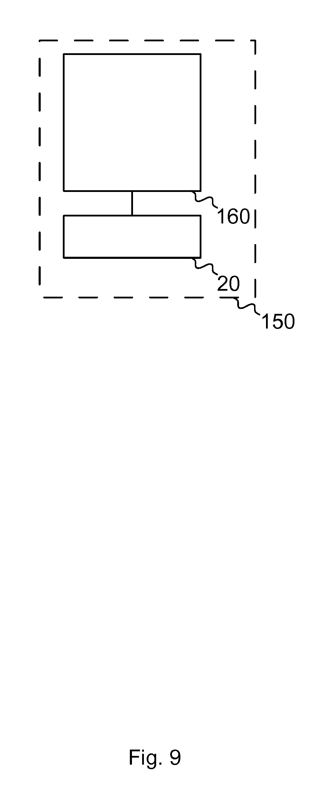

Fig. 9 illustrates a block diagram of an embodiment of a presentation device 150 comprising the apparatus 20. The presentation device further comprises one or more content clients 160, which is/are coupled to the control module 26.

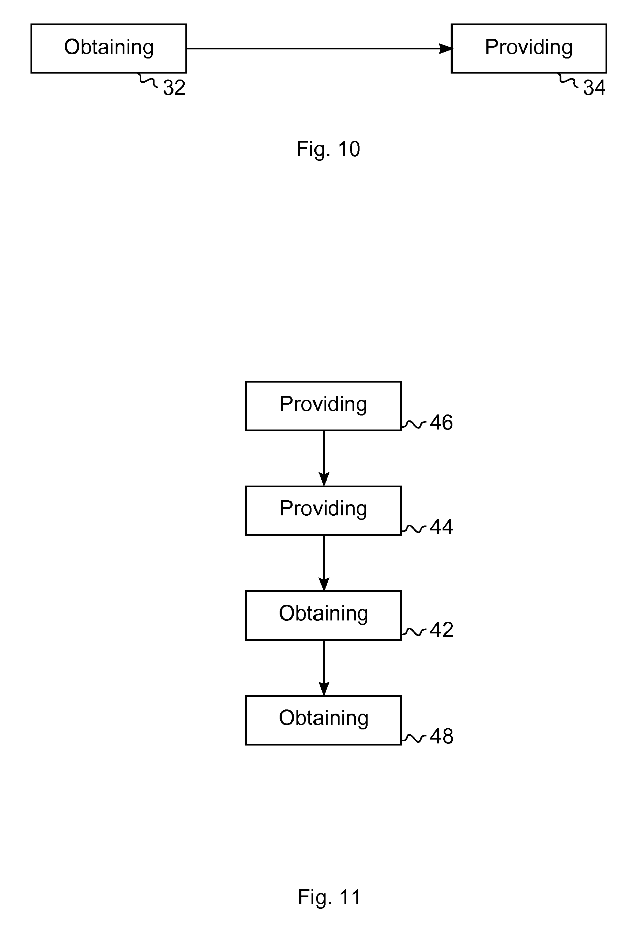

Fig. 10 shows a block diagram of a flow chart of an embodiment of a method for providing information related to a service configuration for a service provided in a network. The network 300 further comprises one or more content servers 200 and one or more presentation devices 150, which comprise one or more content clients 160. The service is being provided from the one or more content servers 200 to the one or more content clients 160. The method comprises obtaining 32 information related to one or more context parameters of the presentation device (150) and providing 34 the information related to the service configuration based on the information related to the one or more context parameters of the presentation device 150.

Fig. 11 shows a block diagram of a flow chart of an embodiment of a method for a presentation device 150 comprising a content client 160 for a network 300. The network 300 further comprises a content distribution control server 100 and one or more content servers 200. The method comprises obtaining 42 information from a content distribution control server 100 and providing 44 information to the content distribution control server 100. The method further comprises providing 46 information related to context parameters to the content distribution control server 100 and obtaining 48 information related to a service configuration from the content distribution control server 100.

Some embodiments comprise a digital control circuit installed within the apparatus for performing the method. Such a digital control circuit, e.g. a Digital Signal Processor (DSP), needs to be programmed accordingly. Hence, yet further embodiments also provide a computer program having a program code for performing embodiments of the method, when the computer program is executed on a computer, a digital processor, or a programmable hardware component. A further embodiment is a computer readable storage medium storing instructions which, when executed by a computer, processor, or programmable hardware component, cause the computer to implement one of the methods described herein.

Embodiments may provide the benefit that it may allow the transparent integration of a central adaptation service into the standard HAS protocol flow. This means that service operators might deploy centralized adaptation without changing their existing infrastructure (i.e., content servers, CDNs).

Simple implementations of embodiments may only require to change the streaming client at the mobile device. However, in some embodiments may be fully transparent to the content client as well. In this case, not even the player application may have to be modified to introduce centralized adaptation.

A second benefit of embodiments may be that they may enable to deploy an adaptation server without the need to access the infrastructure of the content provider. This means that adaptation might be performed by third parties, which may be in a better position to perform adaptation. Such third parties might be network operators who may have access to unique network information or companies that may have access to extensive context information (e.g., maps, user profiles). Embodiments may provide an information exchange that may separate both parties (e.g., the streaming operator might not have access to the context data) but may also provide them with the information they need for adaptation.

A third unique benefit embodiments may be that neither the client nor the server software may have to be changed in order to use centralized adaptation. This may be a particular benefit if closed-source streaming software is used or if the service provider might not want provide the according source code to an adaptation operator.

Benefits of centralized adaptation may comprise, in embodiments, a substantial increase in media quality and efficiency. A centralized system may be aware of the requests and states of multiple users at once. In embodiments, adapting the streaming configuration over multiple users may allow efficient load-balancing and may prevent network outages by avoiding overload.

Benefits of centralized adaptation may also comprise that the adaptation functions may have efficient access to a large amount of data (e.g., radio maps, service or mobility history). Embodiments may enable "anticipatory" optimization schemes, which may show an improvement in streaming quality and high efficiency even in early implementations.

Embodiments may enable the seamless integration of centralized adaptation and, thus, may allow, in embodiments, to profit from this type of adaptation while without changing existing standards.

A person of skill in the art would readily recognize that steps of various above-described methods can be performed by programmed computers. Herein, some embodiments are also intended to cover program storage devices, e.g., digital data storage media, which are ma-chine or computer readable and encode machine-executable or computer-executable pro-grams of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for controlling", "means for transmitting", "means for receiving", "means for transceiving", "means for processing", etc., may be provided through the use of dedicated hardware, such as "a controller", "a transmitter", "a receiver", "a transceiver", "a processor", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

## Claims

1. An apparatus (10) for providing information related to a service configuration for a service provided in a network (300), the network (300) further comprising one or more content servers (200) and one or more presentation devices (150), which comprise one or more content clients (160), the service being provided from the one or more content servers (200) to the one or more content clients (160), the apparatus (10) comprising
at least one input (12) to obtain information related to one or more context parameters of the presentation device (150);
at least one output (14) to provide the information related to the service configuration; and
a control module (16) to provide the information related to the service configuration based on the information related to the one or more context parameters of the presentation device (150).

2. The apparatus (10) of claim 1, wherein the one or more context parameters correspond to one or more elements of the group of a current transmission capacity from the content server to the presentation device (150) in the network (300), a predicted future transmission capacity to the presentation device (150) in the network (300), a geographical localization accuracy of the presentation device (150), a geographical location of the presentation device (150), an application type of a content provided by the content server (200), a set of content-related parameters provided by the content server (200), a transmission capacity demand of the content client (160) and/or of the content server (200), information related to content of the service, trajectory and/or velocity of the presentation device (150) and/or wherein the information related to the one or more context parameters is comprised in or attached to a Hyper Text Transfer Protocol GET-request method, HTTP GET, and/or a Unified Resource Locator, URL, of a HTTP GET request, and/or wherein the information related to the one or more context parameters is communicated using a HTTP POST request method.

3. The apparatus (10) of claim 1, wherein the information related to the service configuration comprises at least one of the elements of the group of information related to a subset of information related to a specific logical location of content of the service, information related to at least one of different quality levels, information related to one or more data segments for the service, information related to the presentation time of the content, information related to the data size of the content, information related to meta information.

4. The apparatus (10) of claim 1, wherein the presentation device (150) corresponds to user equipment wirelessly communicating with the network (300), and/or wherein the control module (16) is configured to change the information related to the service configuration dynamically based on changing information related to the one or more context parameters of at least one of the one or more clients (150).

5. The apparatus (10) of claim 1, wherein the at least one input (12) is further configured to obtain information related to a general logical location of content corresponding to the information related to the one or more context parameters from the one or more content clients (150), and wherein the at least one output (14) is further configured to request, from one of the one or more content servers (200), a list of specific logical locations of content based on the information related to a general logical location of content, and wherein the control module (16) is further configured to provide information related to a subset of the information related to a specific logical location of content based on the information related to a selected configuration and corresponding to the information related to the service configuration.

6. The apparatus (10) of claim 1, wherein the presentation device (150) further comprises one or more context parameter clients (162), and wherein the control module (16) is further configured to obtain, using the at least one input (12), information related to a general logical location of content from the one or more content clients (160) and corresponding information related to the one or more context parameters from the context parameter client (162), and wherein the control module (16) is further configured to request, using the at least one output (14), information related to a list of specific logical locations based on the information related to the general logical location of the content from at least one of the one or more content servers (200), and wherein the control module (16) is further configured to provide, using the at least one output (14), information related to a subset of the information related to the specific logical location of the content, based on the information related to the service configuration to the one or more content clients (160).

7. The apparatus (10) of claim 6, wherein the information related to the general logical location of the content comprises address information of at least one of the one or more content servers (200), and wherein the information related to the list of specific logical locations of the content corresponds to information related to one or more sets of data for the service in accordance with different quality levels or configurations of the service.

8. The apparatus (10) of claim 7, wherein the control module (16) is configured to determine the information related to the service configuration based on the information related to the one or more sets of data and the information related to the one or more context parameters, and wherein the control module (16) is configured to provide, using the at least one output (14), information related to a selected set of data to the one or more content clients (160) as information related to the service configuration.

9. A content distribution control server (100) comprising the apparatus (10) of claim 1.

10. An apparatus (20) for a presentation device (150) comprising a content client (160) for a network (300), the network (300) further comprising a content distribution control server (100) and one or more content servers (200), the apparatus (20) comprising an input (22) to obtain information from the content distribution control server (100);
an output (24) to provide information to the content distribution control server (100); and
a control module (26) to:
control the input (22) and the output (24)
provide information related to context parameters to the content distribution control server (100), and
obtain information related to a service configuration from the content distribution control server (100).

11. The apparatus (20) of claim 10, wherein the input (22) is further configured to obtain information from the one or more content servers (200), the output is further configured to provide information to the one or more content servers (200), the control module (26) is further configured to request a service from the one or more content servers (200), and wherein the control module (26) is further configured to obtain information related to a service content related to the requested service based on the information related to the service configuration.

12. A presentation device (150) comprising the apparatus (20) of claim 11, further comprising one or more content clients (160), which is/are coupled to the control module (26).

13. A method for providing information related to a service configuration for a service provided in a network (300), the network (300) further comprising one or more content servers (200) and one or more presentation devices (150), which comprise one or more content clients (160), the service being provided from the one or more content servers (200) to the one or more content clients (160), the method comprising
obtaining (32) information related to one or more context parameters of the presentation device (150);
providing (34) the information related to the service configuration based on the information related to the one or more context parameters of the presentation device (150).

14. A method for a presentation device (150) comprising a content client (160) for a network (300), the network (300) further comprising a content distribution control server (100) and one or more content servers (200), the method comprising
obtaining (42) information from a content distribution control server (100);
providing (44) information to the content distribution control server (100);
providing (46) information related to context parameters to the content distribution control server (100); and
obtaining (48) information related to a service configuration from the content distribution control server (100).

15. A computer program having a program code for performing at least one of the methods of claims 13 or 14, when the computer program is executed on a computer, a processor, or a programmable hardware component.

## Amended claims

### Amended claims in accordance with Rule 137(2) EPC.

1. An apparatus (10) for providing information related to a service configuration for a service provided in a network (300), the network (300) further comprising one or more content servers (200) and one or more presentation devices (150), which comprise one or more content clients (160), the service being provided from the one or more content servers (200) to the one or more content clients (160), the apparatus (10) comprising
at least one input (12) to obtain information related to one or more context parameters of the presentation device (150);
at least one output (14) to provide the information related to the service configuration;
a control module (16) to provide the information related to the service configuration based on the information related to the one or more context parameters of the presentation device (150);
wherein the one or more context parameters correspond to one or more elements of the group of a current transmission capacity from the content server to the presentation device (150) in the network (300), a predicted future transmission capacity to the presentation device (150) in the network (300), a geographical localization accuracy of the presentation device (150), a geographical location of the presentation device (150), an application type of a content provided by the content server (200), a set of content-related parameters provided by the content server (200), a transmission capacity demand of the content client (160) and/or of the content server (200), information related to content of the service, trajectory and/or velocity of the presentation device (150) and/or wherein the information related to the one or more context parameters is comprised in or attached to a Hyper Text Transfer Protocol GET-request method, HTTP GET, and/or a Unified Resource Locator, URL, of a HTTP GET request, and/or wherein the information related to the one or more context parameters is communicated using a HTTP POST request method.

2. The apparatus (10) of claim 1, wherein the information related to the service configuration comprises at least one of the elements of the group of information related to a subset of information related to a specific logical location of content of the service, information related to at least one of different quality levels, information related to one or more data segments for the service, information related to the presentation time of the content, information related to the data size of the content, information related to meta information.

3. The apparatus (10) of claim 1, wherein the presentation device (150) corresponds to user equipment wirelessly communicating with the network (300), and/or wherein the control module (16) is configured to change the information related to the service configuration dynamically based on changing information related to the one or more context parameters of at least one of the one or more clients (150).

4. The apparatus (10) of claim 1, wherein the at least one input (12) is further configured to obtain information related to a general logical location of content corresponding to the information related to the one or more context parameters from the one or more content clients (150), and wherein the at least one output (14) is further configured to request, from one of the one or more content servers (200), a list of specific logical locations of content based on the information related to a general logical location of content, and wherein the control module (16) is further configured to provide information related to a subset of the information related to a specific logical location of content based on the information related to a selected configuration and corresponding to the information related to the service configuration.

5. The apparatus (10) of claim 1, wherein the presentation device (150) further comprises one or more context parameter clients (162), and wherein the control module (16) is further configured to obtain, using the at least one input (12), information related to a general logical location of content from the one or more content clients (160) and corresponding information related to the one or more context parameters from the context parameter client (162), and wherein the control module (16) is further configured to request, using the at least one output (14), information related to a list of specific logical locations based on the information related to the general logical location of the content from at least one of the one or more content servers (200), and wherein the control module (16) is further configured to provide, using the at least one output (14), information related to a subset of the information related to the specific logical location of the content, based on the information related to the service configuration to the one or more content clients (160).

6. The apparatus (10) of claim 5, wherein the information related to the general logical location of the content comprises address information of at least one of the one or more content servers (200), and wherein the information related to the list of specific logical locations of the content corresponds to information related to one or more sets of data for the service in accordance with different quality levels or configurations of the service.

7. The apparatus (10) of claim 6, wherein the control module (16) is configured to determine the information related to the service configuration based on the information related to the one or more sets of data and the information related to the one or more context parameters, and wherein the control module (16) is configured to provide, using the at least one output (14), information related to a selected set of data to the one or more content clients (160) as information related to the service configuration.

8. A content distribution control server (100) comprising the apparatus (10) of claim 1.

9. An apparatus (20) for a presentation device (150) comprising a content client (160) for a network (300), the network (300) further comprising a content distribution control server (100) and one or more content servers (200), the apparatus (20) comprising an input (22) to obtain information from the content distribution control server (100);
an output (24) to provide information to the content distribution control server (100); and
a control module (26) to:
control the input (22) and the output (24)
provide information related to context parameters to the content distribution control server (100), and
obtain information related to a service configuration from the content distribution control server (100).

10. The apparatus (20) of claim 9, wherein the input (22) is further configured to obtain information from the one or more content servers (200), the output is further configured to provide information to the one or more content servers (200), the control module (26) is further configured to request a service from the one or more content servers (200), and wherein the control module (26) is further configured to obtain information related to a service content related to the requested service based on the information related to the service configuration.

11. A presentation device (150) comprising the apparatus (20) of claim 10, further comprising one or more content clients (160), which is/are coupled to the control module (26).

12. A method for providing information related to a service configuration for a service provided in a network (300), the network (300) further comprising one or more content servers (200) and one or more presentation devices (150), which comprise one or more content clients (160), the service being provided from the one or more content servers (200) to the one or more content clients (160), the method comprising
obtaining (32) information related to one or more context parameters of the presentation device (150);
providing (34) the information related to the service configuration based on the information related to the one or more context parameters of the presentation device (150);
wherein the one or more context parameters correspond to one or more elements of the group of a current transmission capacity from the content server to the presentation device (150) in the network (300), a predicted future transmission capacity to the presentation device (150) in the network (300), a geographical localization accuracy of the presentation device (150), a geographical location of the presentation device (150), an application type of a content provided by the content server (200), a set of content-related parameters provided by the content server (200), a transmission capacity demand of the content client (160) and/or of the content server (200), information related to content of the service, trajectory and/or velocity of the presentation device (150) and/or wherein the information related to the one or more context parameters is comprised in or attached to a Hyper Text Transfer Protocol GET-request method, HTTP GET, and/or a Unified Resource Locator, URL, of a HTTP GET request, and/or wherein the information related to the one or more context parameters is communicated using a HTTP POST request method.

13. A method for a presentation device (150) comprising a content client (160) for a network (300), the network (300) further comprising a content distribution control server (100) and one or more content servers (200), the method comprising
obtaining (42) information from a content distribution control server (100);
providing (44) information to the content distribution control server (100);
providing (46) information related to context parameters to the content distribution control server (100);
obtaining (48) information related to a service configuration from the content distribution control server (100);
wherein the one or more context parameters correspond to one or more elements of the group of a current transmission capacity from the content server to the presentation device (150) in the network (300), a predicted future transmission capacity to the presentation device (150) in the network (300), a geographical localization accuracy of the presentation device (150), a geographical location of the presentation device (150), an application type of a content provided by the content server (200), a set of content-related parameters provided by the content server (200), a transmission capacity demand of the content client (160) and/or of the content server (200), information related to content of the service, trajectory and/or velocity of the presentation device (150) and/or wherein the information related to the one or more context parameters is comprised in or attached to a Hyper Text Transfer Protocol GET-request method, HTTP GET, and/or a Unified Resource Locator, URL, of a HTTP GET request, and/or wherein the information related to the one or more context parameters is communicated using a HTTP POST request method.

14. A computer program having a program code for performing at least one of the methods of claims 12 or 13, when the computer program is executed on a computer, a processor, or a programmable hardware component.
